# EUROPÄISCHE PATENTANMELDUNG

(11) **EP 4 564 336 A1**
(43) Veröffentlichungstag der Anmeldung: **04.06.2025**
(21) Anmeldenummer: 24207409.4
(22) Anmeldetag: 18.10.2024
(51) Int. Cl.: G09B 23/30, G09B 23/32

(54) **SIMULATOR-SYSTEM FÜR DIE DURCHFÜHRUNG VON MESSUNGEN ZUR NORM-KONTROLLE AKUSTISCHER EIGENSCHAFTEN VON MITTELOHR-IMPLANTATEN AN EINEM MECHANISCHEN MODELLOBJEKT UND VERFAHREN ZU DESSEN HERSTELLUNG**

(30) Priorität: 29.11.2023 DE 202023107064 U
(71) Anmelder: Heinz Kurz GmbH, 72144 Dusslingen (DE)
(72) Erfinder: SANDER, Alexander, 79822 Titisee-Neustadt (DE); STIEGELE, Thomas, 72585 Riederich (DE); MERTENS, Matthias, 24568 Kaltenkirchen (DE)
(74) Vertreter: Kohler Schmid Möbus Patentanwälte

(57) **Zusammenfassung**

Ein Simulator-System (10) für Messungen akustischer Eigenschaften von passiven Mittelohr-Implantaten (14'; 14"; 14‴), mit einem physikalischen Ohr-Modell (11) zur biometrischen Simulation von Teilen des menschlichen Ohrs umfassend einen ersten Funktionsabschnitt (12'), der das humane Mittelohr nachstellt, mit einer Detektionsvorrichtung (13) zur Messung von akustischen Parametern eines in den ersten Funktionsabschnitt eingesetzten Mittelohr-Implantats, und mit einem Auswertemodul (15) zur Speicherung und Bewertung der gemessenen Parameter-Daten, ist dadurch gekennzeichnet, dass das physikalische Ohr-Modell ausschließlich artifizielle Materialien einschließlich Kunststoffe und/oder Metallteile enthält, dass das Ohr-Modell einen zweiten Funktionsabschnitt (12") umfasst, der das humane Innenohr nachstellt und eine mit Flüssigkeit (16a) gefüllte, geschlossene Kavität (16) aufweist, dass die Detektionsvorrichtung mindestens eine an einer Außenwand oder innerhalb der geschlossenen Kavität angeordnete Drucksonde (17) umfasst, die ein Hydrophon (17') innerhalb Kavität umfasst, welches auf einer Innenfläche der Kavität in der Flüssigkeit angeordnet ist, dass eine elektrische Signalleitung (18) von der Detektionsvorrichtung zum Auswertemodul führt, von welcher ein Teil abgedichtet durch die Kavität hindurchtritt und in das Hydrophon mündet. Dieses biomimetisch basierte System verzichtet vollständig auf Präparate aus Leichenteilen, ist preisgünstig, kompakt, leicht transportierbar und erzielt dauerhaft reproduzierbare Messergebnisse.

## Beschreibung

Die Erfindung betrifft ein Simulator-System zur Durchführung von Messungen akustischer Eigenschaften von passiven Mittelohr-Implantaten, mit einem physikalischen Ohr-Modell zur Simulation von Teilen des menschlichen Ohrs umfassend einen ersten Funktionsabschnitt, der das humane Mittelohr nachstellt, mit einer Detektionsvorrichtung zur Messung von ausgewählten, zeitlich veränderlichen akustischen Parametern eines in den ersten Funktionsabschnitt eingesetzten Mittelohr-Implantats, und mit einem Auswertemodul, welches mit der Detektionsvorrichtung gemessene Parameter-Daten speichert und bewertet.

Ein solches System ist bekannt aus der Norm ASTM F2504-05 (= Referenz [1]).

### Hintergrund der Erfindung

Die Erfindung befasst sich allgemein mit der Validierung im Bereich von Hör-Implantaten, die in das menschliche Ohr eingesetzt und vorher auf technische Tauglichkeit getestet werden sollen.

Im Allgemeinen wird eine genormte Leistungsbewertung von Mittelohrimplantaten für humane Anwendungen in der Entwicklungsphase mit menschlichen Schläfenbein-Präparaten durchgeführt, so dass menschliche Schläfenbein-Präparate für den Test von Mittelohrprothesen auf Norm-Konformität bisher unerlässlich sind, wie auch in Referenz [1] vorgeschlagen und beschrieben.

Es ist jedoch im Allgemeinen schwierig, beim Einsatz von anatomischen Präparaten aus Leichenteilen unter allen Umständen und dauerhaft gut reproduzierbare experimentelle Ergebnisse zu erhalten, zumal das Angebot an Leichen aufgrund diverser Länderbestimmungen jedenfalls in den Industriestaaten äußerst begrenzt und die Nachfrage danach entsprechend hoch ist. In vielen Ländern ist also eine gewisse Knappheit an menschlichen Leichen bzw. Leichenteilen zu beobachten. Letztere sind einerseits kostspielig im Betrieb und in manchen Ländern schon wegen ethischer Erwägungen oder entsprechender Gesetzgebung nur sehr erschwert oder gar nicht zugänglich.

Zudem hat jede Leiche natürlich unterschiedliche physikalische und chemische Eigenschaften und die entsprechenden Leichenteile reagieren in der Regel relativ empfindlich auf wechselnde Umweltfaktoren wie Temperatur und Feuchtigkeit, was die Haltbarkeit beeinträchtigt.

Daher besteht ein hoher Bedarf an Test-Systemen der eingangs definierten Art, mit denen unter möglichst realistischen Bedingungen und möglichst reproduzierbar die von der Norm gemäß Referenz [1] geforderten Parameter vermessen werden können, ohne dabei auf menschliche Körper beziehungsweise Körperteile zurückgreifen zu müssen, wobei aber dennoch ein realistisch modelliertes Messumfeld wie bei den in Referenz [1] beschriebenen Messungen mit Leichenteilen vorherrschen soll.

Bei der Durchführung des Prüfverfahren im Zusammenhang mit der Norm gemäß Referenz [1] kommen normalerweise menschliche Schläfenbeinknochen (siehe 6.2.1) zum Einsatz. Das menschliche Schläfenbein ist ein anerkanntes Modell (siehe 5.3), das sich eng an die Biomechanik des lebenden Mittelohres anlehnt.

Des Weiteren beschreibt die Norm ASTM F2504-05 unter anderem, wie an humanen Felsenbein-Präparaten ex-vitro mittels Laser-Doppler-Vibrometrie die Übertragungsfunktion von implantierbaren Mittelohr-Hörgeräten und/oder -Implantaten aufgenommen und interpretiert werden muss.

Auch für passive Mittelohrimplantate wird international diese Norm ASTM F2504-05 herangezogen und derzeit ausschließlich angewendet.

In der Publikation "A 3D-printed functioning anatomical human middle ear model" von I. Kuru et al. (= Referenz [2]) wird eine zumindest teilweise mittels 3D-Druck hergestellte Apparatur beschrieben, welche das menschliche Mittelohr nachstellen soll und prinzipiell ohne die Verwendung von humanen Leichteilen auskommt. Hier ist ebenfalls der Einsatz eines Laser-Doppler-Vibrometers zwingend erforderlich. Auch hier werden jedoch die Dämpfungseffekte durch die Flüssigkeit des Innenohrs nicht berücksichtigt. Außerdem beschäftigt sich Referenz [2] lediglich mit der Erstellung und Handhabung eines physikalischen Mittelohr-Modells, jedoch nicht mit der Erprobung und Evaluation von implantierbaren Mittelohrprothesen.

Ein Problem sowohl bei den Vorschlägen nach Referenz [1] als auch bei Referenz [2] ist die jeweils zwingend erforderliche Verwendung eines sehr kostspieligen, aber dennoch fehleranfälligen und viel Platz beanspruchenden Laser-Doppler-Vibrometers.

### Literatur-Vorschläge auf dem Gebiet medizinischer Trainingssysteme

Während sich die vorliegende Erfindung wie auch die hierfür generische Referenz [1] ausschließlich mit der Validierung von Mittelohrprothesen befassen, welche in das menschliche Ohr implantierbar sein sollen, werden in technisch davon weiter entfernten Gebieten im Zusammenhangmit medizinischen Trainingssystemen ebenfalls Möglichkeiten des Einsatzes von Apparaturen mit realistischen otologischen Umgebungen diskutiert. Ziel ist dabei in der Regel die Bereitstellung eines Trainingssystems, das es Chirurgen erlaubt, möglichst viele der typischen Schritte bei einer echten Operation im Modell zu üben und dabei ihre entsprechenden Fähigkeiten zu verbessern.

DE 10 2018 118 918 B3 (= Referenz [3]) beschreibt ein Trainingssystem zur Durchführung von chirurgischen Eingriffen an einem mechanischen Modellobjekt mit einem anatomischen Präparat oder einer Simulationseinheit zur Darstellung von Teilen des menschlichen Körpers. Das in Referenz [3] beschriebene Trainingssystem kann jedoch prinzipiell keine Implantation abbilden und erlaubt naturgemäß erst recht keine Vermessung und Validierung von implantierbaren Mittelohrprothesen.

In der DE 10 2005 041 942 A1 (= Referenz [4]) ist ein ähnliches Trainingssystem wie in Referenz [3] mit einer Simulationseinheit zur Darstellung von Teilen des menschlichen Körpers beschrieben, die jedoch keinen zweiten Funktionsabschnitt aufweist, der einen Bereich des humanen Weichteilsystems nachstellt. Es sind nur Tympano-Plastiken vorgesehen, aber keine Stapes-Plastiken, kein Knorpelgewebe und eben auch kein Weichteilgewebe.

Ebenfalls ein ähnliches Trainingssystem wie in Referenz [3], allerdings hier mit einem auf Leichenteilen basierenden anatomischen Präparat, ist bekannt aus der Publikation von G. Strauß et al., "Evaluation of eines Trainingssystems für die Felsenbeinchirurgie mit opto-elektronischer Detektion", HNO 2009 · 57:999-1009, Springer Medizin Verlag, 20. August 2009 (= Referenz [5]). Auch hier sind keine Manipulationen durch ein Implantat vorgesehen.

In der Publikation von Shawn B. Mathews et al., "Incus and Stapes Footplate Simulator", Laryngoscope 107: December 1997, 1614-1616 (= Referenz [6]) ist ein Simulator für Incus und Stapes-Fußplatte beschrieben, mit welchem eine Übungsmöglichkeit zur Verbesserung der otologisch-chirurgischen Fähigkeiten angeboten werden soll. Der dortige Simulator entspricht jedoch nicht den realen anatomischen Gegebenheiten.

Ebenso verhält es sich mit der Publikation von A. O. Owa et al., "A middle-ear simulator for practicing prostheses placement for otosclerosis surgery using ward-based materials", The Journal of Laryngology & Otology, June 2003, Vol. 117, pp. 490-492 (=Referenz [7]), die einen Mittelohr-Simulator zum Trainieren der Implantation von Mittelohrprothesen beschreibt.

Das gleiche gilt auch für die Publikation von Robert Mills et al., "Surgical skills training in middle-ear surgery", The Journal of Laryngology & Otology, March 2003, Vol. 117, pp. 159-163 (=Referenz [8]), die einen Überblick über otologisch-chirurgische Trainingsmöglichkeiten im Jahre 2002 gibt. Es handelt sich bei den beschriebenen Anordnungen um Simulatoren rein für anatomische Lehrzwecke. Eine Vermessung und Validierung von implantierbaren Mittelohrprothesen ist auch hier nicht vorgesehen.

Evan A. Longfield et al. beschreiben im Artikel "3D Printed Pediatric Temporal Bone: A Novel Training Model", Otology & Neurotology, 2015, 36:793-795 (=Referenz [9]) ein mit 3D-Drucker hergestelltes pädriatrisches Trainingsmodell mit einem kindlichen Schläfenknochen. Dieses umfasst allerdings lediglich eine Abbildung des knöchernen Teils des Felsenbeins. Etwaige Manipulationen durch ein Implantat sind nicht vorgesehen, ebenso keine Darstellung der akustischen Übertragungsfunktion nach einer Manipulation. Es erfolgt keine Verarbeitung der erfassten Daten.

Die Autoren Konrad Entsfellner et al. beschreiben in ihrer Publikation "A new physical temporal bone and middle ear model with complete ossicular chain for simulating surgical procedures", Proceedings of the 2015 IEEE Conference of Robotics and Biomimetics, Zhuhai, China, pp. 1654-1659 (=Referenz [10]) ein Modell für das Schläfenbein und die komplette Gehörknöchelchenkette zum Simulieren von chirurgischen Verfahren. Auch hier sind keine Manipulationen durch ein Implantat vorgesehen, ebenso keine Darstellung der akustischen Übertragungsfunktion nach einer Manipulation. Es erfolgt keine Verarbeitung der erfassten Daten.

Aus dem Artikel Matthew M. Dedmon et al. beschreiben in ihrem Artikel "Development and Validation of a Modular Endoscopic Ear Surgery Skills Trainer", Otology & Neurotology, 2017, 38:1193-1197 (=Referenz [11]) ist ein Trainingssystem für modulare endoskopische Ohr-Chirurgie bekannt, das jedoch keine wirklich enge Übereinstimmung mit den tatsächlichen anatomischen Gegebenheiten aufweist. Außerdem sind auch hier keine Manipulationen durch ein Implantat vorgesehen, ebenso keine Darstellung der akustischen Übertragungsfunktion nach einer Manipulation. Es erfolgt keine Verarbeitung der erfassten Daten.

Yann Nguyen et al. beschreiben im Artikel "Modifications to a 3D-printed temporal bone model for augmented stapes fixation surgery teaching", Eur Arch Otorhinolaryngol, 2017, 274:2733-2739 (=Referenz [12]) anhand von Modifikationen an einem 3D-gedruckten Schläfenbeinmodell Lernmöglichkeiten zur Verbesserung der Stapes-Fixierung. Insbesondere ist hier ein Kraftsensor am Stapes vorgesehen.

T. Beleites et al. geben in der Publikation "Von der Rekonstruktion zur Funktion; Tympanoplastik-Training mit Real-Time Feedback", HNO 7, 2021, 69:556-561 (=Referenz [13]) einen Überblick über ein risikofreies Tympanoplastik-Training mit Echtzeit-Rückkopplung.

### Allgemeine Literatur zur Otologie

Jan Christoffer Luers et al. beschreiben in ihrem Fachbuch-Artikel "Surgical anatomy and pathology of the middle ear", J. Anat. (2016) 228, pp338-353 (=Referenz [14]) allgemein den Stand der Mittelohr-Chirurgie im Jahre 2015.

Dominik Péus et al. schildern in ihrer Publikation "Sheep as large animal ear model: Middle-ear ossicular velocities and intracochlear sound pressure" in Hearing Research (2017), 351 Jg., pp88-97 (=Referenz [15]) die Erforschung der Eigenschaften der cochlea von Schafskadavern, unter anderem unter Verwendung von MEMS-basierten Hydrophonen.

Ebenfalls mit der Untersuchung von Kadavern, allerdings hier mit Mittelohr-Präparaten von toten Menschen, beschäftigen sich Martin Grossöhmichen et al. in ihrem Artikel "Validation of methods for prediction of clinical output levels from measurements in human cadaveric ears" in Scientific Reports (2017), 7. Jg., Nr. 1, pp1-10 (=Referenz [16]). Allerdings werden ausschließlich aktive Mittelohr-Implantate (AMEI), jedoch keine passiven Prothesen, mittels Platzaufwändiger Standard-Labormessanordnungen, insbesondere mit faseroptischen Druckwandlern an Kadaver-Teilen getestet, wobei man akustische Parameter wie die Druckunterschiede von scala vestibuli und scala tympani ermittelt.

CN 110246404 B (=Referenz [17]) offenbart ein dem Ohr mechanisch nachempfundenes -anatomisch allerdings keineswegs biometrisch korrekt nach den geometrischen und akustischen Eigenschaften des menschlichen Hör-Organs gestaltetes- Modell zur Veranschaulichung des prinzipiellen Hör-Prozesses. Ein Funktionsabschnitt für das Innenohr umfasst zwar einen mit Flüssigkeit gefüllten, geschlossenen Container, jedoch werden Lichtquellen in diesem Innenohr-Modell verwendet, um die Nerven-Reiz-Weiterleitung zu verdeutlichen. Für einen serienmäßigen Qualitätstest der akustischen Eigenschaften und Funktionen von passiven Mittelohrprothesen ist ein derartiger Aufbau daher auf keinen Fall vorgesehen oder gar geeignet. Auch werden die verwendeten Materialien nicht angegeben, insbesondere nicht, ob ausschließlich artifizielles Material für das Modell verbaut wurde.

Im Gegensatz zu sämtlichen oben beschriebenen chirurgischen Lern- und Trainings-Systemen definiert die bereits eingangs genannte Referenz [1] eine internationale Norm für den standardmäßig geforderten Output von implantierbaren Mittelohrprothesen. Unter anderem beschreibt die Normvorschrift ASTM F2504-05 ein für die vorliegende Erfindung generisches Simulator-System zur Durchführung von Messungen akustischer Eigenschaften von passiven Mittelohr-Implantaten, mit einem physikalischen Ohr-Modell zur Simulation von Teilen des menschlichen Ohrs sowie mit sämtlichen eingangs definierten, für die vorliegende Erfindung obligatorischen Merkmalskomplexen.

Allerdings liegt ein wesentliches Problem dieser generischen Apparatur in der Verwendung von präparierten Leichenteilen zur anatomisch realistischen Nachbildung einer "Norm-Umgebung" für die Validierung von implantierbaren Mittelohrprothesen. Ein weiterer Nachteil dieser bekannten Apparatur liegt unter anderem in der zwingenden Verwendung eines Laser-Doppler-Vibrometers.

### Aufgabe der Erfindung

Der vorliegenden Erfindung liegt demgegenüber die Aufgabe zugrunde, ein gattungsgemäßes Simulator-System der eingangs beschriebenen Art mit möglichst einfachen technischen Mitteln unaufwändig und kostengünstig dahingehend zu verbessern, dass die oben geschilderten Nachteile und Unzulänglichkeiten der bekannten Vorrichtung -zumindest teilweise- vermieden werden. Insbesondere soll mit der Erfindung ein Simulator-System vorgestellt werden, das zwar ein biomimetisch basiertes, möglichst realistisches physikalisches Ohrmodell zur Nachbildung der akustischen Mittelohr-Eigenschaften einsetzt, jedoch dafür auf die Verwendung von anatomischen Präparaten aus Leichenteilen verzichtet.

Ein weiteres Ziel der Erfindung ist es, die Norm gemäß Referenz [1] in Zukunft abzulösen.

Zudem soll das erfindungsgemäße Simulator-System keine sehr teuren und platzintensiven Laser-Doppler-Vibrometer mehr benötigen. Schließlich soll das Gerät preisgünstig, kompakt und leicht transportierbar sein und möglichst dauerhaft reproduzierbare Messergebnisse erzielen können.

### Kurze Beschreibung der Erfindung

Diese relativ komplexe Aufgabe wird, ausgehend von den eingangs sowie im Oberbegriff des Anspruchs 1 angegebenen Merkmalen, erfindungsgemäß auf ebenso überraschend einfache wie wirkungsvolle und kostengünstig zu realisierende Weise dadurch gelöst, dass das physikalische Ohr-Modell des Simulator-Systems -ganz im Gegensatz zu den Vorschriften von Referenz [1], welche in Zukunft durch die vorliegende Erfindung abgelöst werden könnte- ausschließlich artifizielle Materialien einschließlich Kunststoffe und/oder Metallteile enthält, dass das physikalische Ohr-Modell einen zweiten Funktionsabschnitt umfasst, der das humane Innenohr nachstellt und eine mit Flüssigkeit gefüllte, geschlossene Kavität aufweist, dass die Detektionsvorrichtung mindestens eine Drucksonde umfasst, die an einer Außenwand oder innerhalb der geschlossenen Kavität des zweiten Funktionsabschnitts angeordnet ist, dass die Drucksonde ein Hydrophon umfasst, welches innerhalb der geschlossenen Kavität zumindest teilweise von der Flüssigkeit umgeben angeordnet ist, dass das Hydrophon auf einer Innenfläche der geschlossenen Kavität des zweiten Funktionsabschnitts angeordnet ist, dass mindestens eine elektrische Signalleitung von der Detektionsvorrichtung zum Auswertemodul führt, über welche mit der Detektionsvorrichtung gemessene Parameter-Daten direkt an das Auswertemodul geleitet werden können, und dass ein Teil der elektrischen Signalleitung abgedichtet durch eine Wand der geschlossenen Kavität hindurchtritt und in das Hydrophon mündet.

Der Schwerpunkt bei der Gestaltung des physikalischen Ohr-Modells liegt dabei darauf, die akustischen Eigenschaften des menschlichen Ohres, vor allem die Schwingungseigenschaften des Steigbügels des menschlichen Schläfenbeins gemäß den in der Norm ASTM F2504-05 vorgeschriebenen physikalischen Messparametern nachzubilden. Dabei spielen die statischen und dynamischen Eigenschaften der Komponenten des Mittelohres eine wichtige Rolle.

Durch den neuartigen Aufbau mit einer geschlossenen Flüssigkeits-Kavität und die damit ermöglichte neue Funktionsweise des erfindungsgemäßen Simulator-Systems kann sichergestellt werden, dass die Umgebung der zu vermessenden Mittelohrprothese im physikalische Ohr-Modell anatomisch korrekt und akustisch realistisch abgebildet wird, ohne dass dazu jedoch anatomische Präparate von Leichenteilen erforderlich sind.

Die Drucksonde der Detektionsvorrichtung misst im Regelbetrieb die von der simulierten Innenohr-Flüssigkeit wie in der Natur gedämpften akustischen Wellen und gibt die Signale direkt an das Auswertemodul weiter. Damit ist es möglich, die Dämpfung der Schallwellen, welche durch die Flüssigkeitsbewegung in der Cochlea beim Anliegen eines Schallereignisses in der Natur immer vorherrscht, im Gegensatz zu den Vorschlägen der Referenzen [1] und [2] deutlich realistischer abzubilden und die mit dieser Apparatur gewonnenen Messdaten mithin erheblich zu verbessern.

Auch der Einsatz eines Laser-Doppler-Vibrometers -wie in den Referenzen [1] und [2] vorgeschrieben- kann dadurch entfallen.

Durch den Einsatz eines Hydrophons innerhalb der geschlossenen Kavität, welches zumindest teilweise von der Flüssigkeit umgeben ist, wird die Detektion auch kleiner übertragener Schallwechseldrücke ermöglicht, ohne dafür eine aufwendige Messtechnik einzusetzen zu müssen. Ein Teil der elektrischen Signalleitung tritt abgedichtet durch eine Wand der geschlossenen Kavität hindurch und mündet in das Hydrophon, welches auf einer Innenfläche der geschlossenen Kavität des zweiten Funktionsabschnitts angeordnet ist. Dabei schließt das Hydrophon bündig mit der Außenhaut der Kavität ab und verhindert somit turbulente Strömungen.

Besondere Vorteile des erfindungsgemäßen Simulator-Systems gegenüber dem Stand der Technik sind unter anderem:
- Einfachheit der Bedienung
- Präzise Leistungsbewertung von Hör-Implantaten
- realistische u. reproduzierbare Testumgebung
- erhöhte Sicherheit, insbesondere durch Verringerung der Kontaminationsgefahr
- Kostenersparnis

### Bevorzugte Ausführungsformen der Erfindung

Ganz besonders bevorzugt sind Ausführungsformen der Erfindung, die dadurch gekennzeichnet sind, dass die Drucksonde ein Luft-Mikrophon umfasst, welches an einer Außenwand der geschlossenen Kavität angeordnet ist, und in welches ein Teil der elektrischen Signalleitung mündet.

Bei der Luft-Mikrophon-Variante werden die zu übertragenden Schallwechseldrücke zusätzlich oder ausschließlich von einem Luftmikrophon detektiert. Dadurch könnte prinzipiell sogar auf den zweiten Funktionsabschnitt (Innenohr) verzichtet werden.

In der Praxis erweisen sich Weiterbildungen dieser oben beschriebenen Ausführungsformen als besonders zweckmäßig, bei welchen das Hydrophon und/oder das Luft-Mikrophon der Drucksonde jeweils einen Durchmesser zwischen 0,5mm und 5mm, vorzugsweise zwischen 1mm und 2mm, aufweisen.

Die eigentliche Validierungs-Messung wird also erfindungsgemäß durch Drucksonden bzw. Hydrophone in einer nachgebildeten, mit Flüssigkeit gefüllten Cochlea vorgenommen.

Von besonders großem praktischen Vorteil sind Weiterbildungen dieser Klasse von Ausführungsformen der Erfindung, bei welchen das physikalische Ohr-Modell zur Simulation von Teilen des menschlichen Ohrs einen dritten Funktionsabschnitt umfasst, der das humane äußere Ohr nachstellt und insbesondere dessen Schallleitungseigenschaften nachbildet.

Dieser dritte Funktionsabschnitt mit den Außenohr-Funktionen macht daher auch akustische Freifeld-Messungen möglich.

Im Stand der Technik ist bisher kein Simulator-System beschrieben, das sowohl Knochen- und Weichteilgewebe als auch Knorpel abbildet. Dies ist aber insbesondere für Anwendungen in der Otologie ganz besonders wichtig.

Ebenfalls von praktischem Vorteil sind Ausführungsformen der Erfindung, die sich dadurch auszeichnen, dass die Funktionsabschnitte über ein Flanschsystem miteinander verbunden sind.

Die Simulator-Systeme sollen möglichst keine oder nur wenig Handarbeit bei der Herstellung abverlangen und in einzelne, leicht zusammenführbare Module aufgeteilt und zusammengesteckt werden können. Da die Komponenten gut trennbar sein müssen, werden sie am besten *nicht* mit Kleber verbunden oder gar verschweißt.

Eine weitere wichtige Klasse von Ausführungsformen des erfindungsgemäßen Simulator-Systems ist dadurch gekennzeichnet, dass der erste Funktionsabschnitt, der das humane Mittelohr nachstellt, Komponenten aufweist, welche die mechanischen Eigenschaften des Trommelfells, der Bänder und Sehnen des Mittelohrs, der Mittelohrknöchelchen sowie der Mittelohrgelenke, insbesondere des Incudo-Malleal- und des Incudo-Steigbügel-Gelenks, nachbilden.

Ganz besonders bevorzugt ist auch Klasse von Ausführungsformen des erfindungsgemäßen Simulator-Systems, die sich dadurch auszeichnen, dass verschiedene drücke im Mittelohr simuliert werden können. Dadurch können pathologische Zustände des Mittelohres dargestellt werden.

Die Gehörknöchelchenkette ist beweglich und es können verschiedene Szenarien audiologisch untersucht werden:
- Implantation von aktiven Mittelohr-Hörgeräten
- Tympanoplastik (nach Wullstein Typ 1 - 5)
- Stapesplastik
- Trommelfell Rekonstruktionen
- Setzen von Paukenröhrchen

Die Simulations-Modelle für Gehörknöchelchen können z.B. 20% kleiner gedruckt und anschließend mit einer Silikonschicht überzogen und miteinander verbunden werden.

Von besonderem praktischen Vorteil sind Weiterbildungen dieser Klasse von Ausführungsformen der Erfindung, bei welchen die Komponenten des ersten Funktionsabschnitts, welche die mechanischen Eigenschaften von funktionellen Strukturen des humanen Mittelohrs nachbilden, in ihrer Geometrie, relativen Position und Winkelausrichtung zueinander, sowie in ihren Weichteileigenschaften den entsprechenden anatomischen Komponenten des humanen Mittelohrs nachempfunden beziehungsweise nachgebildet sind.

Besonders bevorzugt sind auch Ausführungsformen des erfindungsgemäßen Simulator-Systems, die sich dadurch auszeichnen, dass die geschlossene Kavität des zweiten Funktionsabschnitts ein Druckausgleichsfenster aufweist, welches der menschlichen Hörschnecke (rundes Fenster) nachempfunden ist.

Im Hinblick auf die erforderliche realistische Abbildung ist eine Gestaltung von Ausführungsformen der Erfindung besonders günstig, bei welchen die Funktionsabschnitte des physikalischen Ohr-Modells auf der Grundlage der anatomischen Struktur sowie der statischen und dynamischen Eigenschaften von Teilen des menschlichen Ohrs, insbesondere aufgrund von Laborversuchen sowie mittels CT-Bildern erzeugt sind.

Ganz besonders bevorzugt ist auch Klasse von Ausführungsformen des erfindungsgemäßen Simulator-Systems, die sich dadurch auszeichnen, dass in das Auswertemodul ein Expertensystem und/oder künstliche Intelligenz implementiert ist, womit auf den gemessenen und/oder simulierten Parameter-Daten basierende Informationen mit vorgegebenen Norm-Werten verglichen werden können.

Spezielle Weiterbildungen dieser Klasse von Ausführungsformen sind dadurch gekennzeichnet, dass das Auswertemodul so ausgelegt ist, dass es das normale Übertragungsverhalten eines in das Simulator-System eingesetzten Implantats optisch im Frequenzbereich der menschlichen Sprache, insbesondere zwischen 125Hz und 16kHz, nachbildet und in Echtzeit während der Validierung mit einer akustischen Signalübertragung des gesunden menschlichen Gehörs vergleicht.

In den Rahmen der vorliegenden Erfindung fällt auch ein Verfahren zur Herstellung eines Simulator-Systems der oben beschriebenen erfindungsgemäßen Art, welches sich dadurch auszeichnet, dass die Kavität zunächst mit jeweils mindestens zwei Öffnungen zum späteren Einfüllen der Flüssigkeit erzeugt wird, und dass nach dem Befüllen der Kavität mit der Flüssigkeit sämtliche Öffnungen anschließend flüssigkeitsdicht, insbesondere fluiddicht, versiegelt werden, vorzugsweise mittels Einwirkung von UV-Strahlung.

Zumindest eine der Öffnungen dient dem Befüllen der jeweiligen Kavität mit Flüssigkeit, mindestens eine andere dem Luftaustritt aus der Kavität.

Bei einer besonders bevorzugten Variante des erfindungsgemäßen Herstellungsverfahrens wird die Kavität mittels eines 3D-Druckverfahrens und vorzugsweise aus CT-tauglichen Materialen hohl und röhrenförmig erzeugt, am besten auf der Grundlage von hochauflösenden CT-Datensätzen von Originalen der nachzubildenden Bereiche des menschlichen Körpers.

Die erfindungsgemäßen Simulatoren sollen (auch nach der Manipulation) CT-taugliche Bilder liefern können, um eine objektive Kontrolle der Ergebnisse sicherzustellen. Verschiedene Materialien mit gleicher Referenz (z.B. ein Implantat oder ein anderer Gegenstand, der im CT-Bild sichtbar wird) werden dazu im CT geprüft.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen.

Die einzelnen Merkmale können je einzeln für sich oder zu mehreren in beliebigen Kombinationen bei Varianten der Erfindung verwirklicht sein. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

In der schematischen Zeichnung sind Ausführungsbeispiele der Erfindung dargestellt, welche in der nachfolgenden Beschreibung näher erläutert werden.

Im Einzelnen zeigen:
- Fig. 1: eine schematische Darstellung einer Ausführungsform des erfindungsgemäßen Simulator-Systems mit physikalischem Ohr-Modell in räumlicher Schnittansicht, sowie mit einem -symbolisch dargestellten- Auswertemodul und der dahin von einer Detektionsvorrichtung im Ohr-Model führenden elektrischen Signalleitung;
- Fig. 2a: eine schematische Detailabbildung einer Ausführungsform des erfindungsgemäßen Simulator-Systems im Vertikalschnitt sowie einer Total-Prothese (Tympanoplastik) zur späteren Überbrückung der menschlichen Gehörknöchelchen-Kette mit einer Trommelfell-Kopfplatte einenends und einem glockenförmigen Anschlussstück zum Innenohr anderenends als zum Testen in den ersten Funktionsabschnitt eingebrachtes passives Mittelohr-Implantat;
- Fig. 2b: wie Fig. 2a, jedoch mit einer zum Testen in den ersten Funktionsabschnitt eingebrachten Teil-Prothese (Stapes-Plastik) mit einer hakenförmigen Befestigungsvorrichtung für ein Gehörknöchelchen einenends und einem Piston als Verbindung zum Innenohr anderenends als passives Mittelohr-Implantat;
- Fig. 2c: wie Fig. 2b, jedoch mit einer zum Testen in den ersten Funktionsabschnitt eingebrachten Teil-Prothese mit einer Clip-förmigen Befestigungsvorrichtung für ein Gehörknöchelchen einenends und einem anderen Clip als Verbindung zum Steigbügel anderenends als passives Mittelohr-Implantat;
- Fig. 3: eine schematische Detailabbildung einer Ausführungsform des erfindungsgemäßen Simulator-Systems im Vertikalschnitt sowie einem zum Testen in den -hier abpumpbaren- ersten Funktionsabschnitt des Mittelohr-Modells eingebrachten aktiven Mittelohr-Implantat;
- Fig. 4a: eine schematische Detailabbildung einer Ausführungsform des erfindungsgemäßen Simulator-Systems im Vertikalschnitt mit einem Druckausgleichsfenster zwischen dem ersten und dem zweiten Funktionsabschnitt;
- Fig. 4b: eine schematische Detailabbildung einer Ausführungsform des erfindungsgemäßen Simulator-Systems im Vertikalschnitt mit einem auspumpbaren ersten Funktionsabschnitt sowie einem daran angeschlossenen Ventil und einer Pumpe, beide jeweils in symbolischer Darstellung;
- Fig. 5: eine schematische Detailabbildung einer Ausführungsform des erfindungsgemäßen Simulator-Systems im Vertikalschnitt mit einem ersten Funktionsabschnitt des Mittelohr-Modells mit darin eingebauten Funktions-Komponenten, welche die mechanischen Eigenschaften des Trommelfells sowie der Bänder und Sehnen des Mittelohrs und der Mittelohrknöchelchen einschließlich deren Gelenkabschnitte nachbilden;
- Fig. 6a: eine schematische Abbildung einer Ausführungsform des physikalischen Ohr-Modells eines erfindungsgemäßen Simulator-Systems im Vertikalschnitt mit einer auf einer Innenfläche der geschlossenen Kavität des zweiten Funktionsabschnitts angeordneten, als Hydrophon ausgebildeten und zumindest teilweise von Flüssigkeit umgebenen Drucksonde;
- Fig. 6b: wie Fig. 6a, jedoch mit einer auf einer Außenfläche der geschlossenen Kavität des zweiten Funktionsabschnitts angeordneten, als Druck-Sensor ausgebildeten Drucksonde;
- Fig. 6c: eine schematische Teil-Abbildung einer Ausführungsform des physikalischen Ohr-Modells eines erfindungsgemäßen Simulator-Systems im Vertikalschnitt mit einer im zweiten Funktionsabschnitt am Übergang zum ersten Funktionsabschnitt angeordneten Drucksonde, die hier zwei Luft-Mikrophone umfasst; und
- Fig. 7: eine schematische Abbildung einer Ausführungsform des physikalischen Ohr-Modells eines erfindungsgemäßen Simulator-Systems wie in Fig.1 im Vertikalschnitt mit einem das Ohr-Modell von dessen drittem Funktionsabschnitt her beschallenden Lautsprecher in symbolischer Darstellung.

Die in den Figuren der Zeichnung schematisch, teils nur im Detail, dargestellten Ausführungsformen des erfindungsgemäßen **Simulator-Systems 10** dienen zur Durchführung von Messungen akustischer Eigenschaften von passiven und/oder aktiven Mittelohr-Implantaten. Das System enthält ein **physikalisches Ohr-Modell 11** zur Simulation von Teilen des menschlichen Ohrs umfassend einen **ersten Funktionsabschnitt 12'; 12a',** der das humane **Mittelohr** nachstellt, eine **Detektionsvorrichtung 13** zur Messung von ausgewählten, zeitlich veränderlichen akustischen Parametern eines in den ersten Funktionsabschnitt 12' eingesetzten Mittelohr-Implantats, sowie ein **Auswertemodul 15,** welches mit der Detektionsvorrichtung 13 gemessene Parameter-Daten speichert und bewertet.

Das erfindungsgemäße Simulator-System 10 zeichnet sich dadurch aus, dass das physikalische Ohr-Modell 11 ausschließlich artifizielle Materialien einschließlich Kunststoffe und/oder Metallteile und keinesfalls Präparate von Leichenteilen enthält.

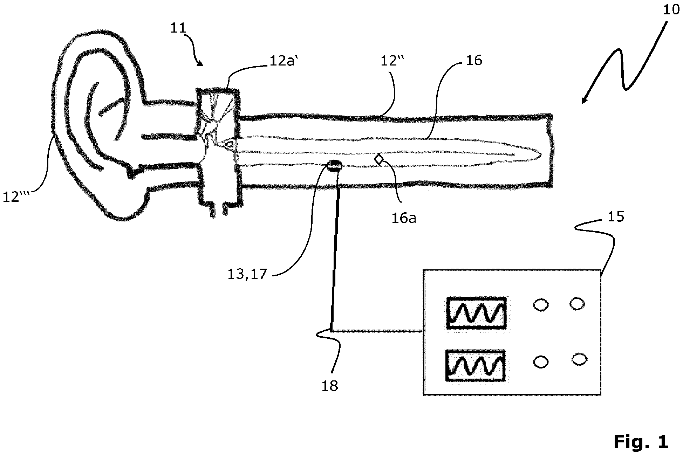

Wie in **Fig. 1** schematisch dargestellt, umfasst das physikalische Ohr-Modell 11 einen **zweiten Funktionsabschnitt 12"**, der das humane **Innenohr** nachstellt und eine **geschlossene Kavität 16** aufweist, welche mit einer **Flüssigkeit 16a** gefüllt ist, die hier lediglich symbolisch als Raute innerhalb der Kavität 16 angedeutet ist und die die Innenohr-Flüssigkeit nachbilden soll.

Bei der Herstellung eines erfindungsgemäßen Simulator-Systems 10 wird in der Regel die Kavität 16 zunächst mit jeweils mindestens zwei Öffnungen zum späteren Einfüllen der Flüssigkeit 16a erzeugt. Nach dem Befüllen der Kavität 16 mit der Flüssigkeit 16a werden sämtliche Öffnungen anschließend flüssigkeitsdicht versiegelt, am einfachsten durch Einwirkung von UV-Strahlung.

Vorzugsweise wird die Kavität 16 mittels eines 3D-Druckverfahrens hohl und röhrenförmig hergestellt, und zwar insbesondere auf der Grundlage von hochauflösenden CT-Datensätzen von Originalen der nachzubildenden Bereiche des menschlichen Körpers, wie weiter unten im Einzelnen erläutert wird.

Die Flüssigkeit 16a in der Kavität 16 soll die Innenohr-Flüssigkeit nachbilden und ausschließlich physiologisch ungefährliche, insbesondere ungiftige Substanzen enthalten.

Des Weiteren umfasst die Detektionsvorrichtung 13 mindestens eine **Drucksonde 17,** die an einer Außenwand oder innerhalb der geschlossenen Kavität 16 des zweiten Funktionsabschnitts 12" angeordnet ist.

Mindestens eine **elektrische Signalleitung 18** führt von der Detektionsvorrichtung 13 zum Auswertemodul 15, über welche mit der Detektionsvorrichtung 13 gemessene Parameter-Daten direkt an das Auswertemodul 15 geleitet werden können.

Das physikalische Ohr-Modell 11 zur Simulation von Teilen des menschlichen Ohrs weist vorzugsweise auch noch einen **dritten Funktionsabschnitt 12‴** auf, der das humane äußere Ohr nachstellt und insbesondere dessen Schallleitungseigenschaften nachbildet.

Die Funktionsabschnitte 12'; 12"; 12‴ können über ein -in der Zeichnung nicht eigens abgebildetes- Flanschsystem miteinander verbunden sein.

Das physikalische Ohrmodell 11 umfasst also in der Regel jeweils ein Modell für das äußere Ohr (dritter Funktionsabschnitt 12‴), für das Mittelohr (erster Funktionsabschnitt 12') und für die Cochlea (zweiter Funktionsabschnitt 12"). Das physikalische Ohrmodell wurde auf der Grundlage der anatomischen Strukturen sowie der statischen und dynamischen Eigenschaften entsprechender Teile des menschlichen Ohres, insbesondere aufgrund von Laborversuchen sowie mittels CT-Bildern erzeugt und im erfindungsgemäßen Simulator-System 10 implementiert.

Mit diesem erfindungsgemäßen Simulator-System 10 sollen in Zukunft Norm-Messungen über etablierte Verfahren möglich sein, z.B. ASTM F2504.24930-1 oder die Tymponometrie. Im Weiteren sollen Validierungen für z.B. Chirurgie-Roboter oder diverse andere Norm-Messungen sowie Kalibrierungsaufgaben vollzogen werden.

In das Auswertemodul 15 ist erfindungsgemäß ein Experten-System und/oder künstliche Intelligenz implementiert, womit auf den gemessenen und/oder simulierten Parameter-Daten basierende Informationen mit vorgegebenen Norm-Werten für Mittelohr-Implantate verglichen werden können.

Vorzugsweise kann das Auswertemodul 15 so ausgelegt sein, dass es das normale Übertragungsverhalten eines eingesetzten Implantats im Frequenzbereich der menschlichen Sprache, insbesondere zwischen 125Hz und 16kHz, nachbildet und in Echtzeit während der Validierung mit einer akustischen Signalübertragung des gesunden menschlichen Gehörs vergleicht.

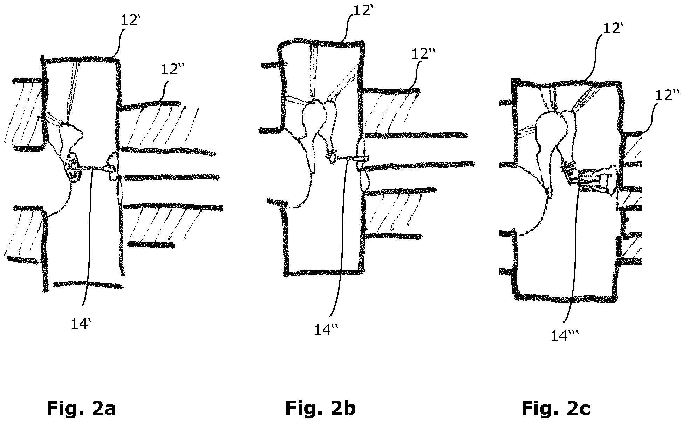

**Fig. 2a** zeigt einen Teil des physikalischen Ohr-Modells 11 einer Ausführungsform des erfindungsgemäßen Simulator-Systems 10, dessen erster Funktionsabschnitt 12' bestückt ist mit einem **passiven Mittelohr-Implantat 14'** in Form einer Total-Prothese (**Tympano-Plastik)** zur späteren Überbrückung der menschlichen Gehörknöchelchen-Kette. Diese Total-Prothese umfasst an ihrem einen Ende eine Trommelfell-Kopfplatte, welche sich nach der Implantation dann von innen gegen das Trommelfell des Patienten abstützt, von dort ankommende äußere Schallwellen aus der dadurch evozierten Trommelfell-Bewegung aufnimmt und mechanisch an einen Mittelteil des Implantats 14' weitergibt. Am anderen Ende des Implantats 14' sitzt in diesem Ausführungsbeispiel eine glockenförmige akustische Verbindung zum Innenohr des Patienten.

Mit der Konfiguration von Fig. 2a soll die ordnungsgemäße Funktion des passiven Mittelohr-Implantats 14' getestet werden.

In **Fig. 2b** ist ein Ausschnitt des physikalischen Ohr-Modells 11 einer ähnlichen Ausführungsform des erfindungsgemäßen Simulator-Systems 10 wie Fig. 2a wiedergegeben. Auch hier ist wieder ein **passives Mittelohr-Implantat 14"** zum Testen in den ersten Funktionsabschnitt 12' eingebracht, das jedoch hier als Teil-Prothese **(Stapes-Plastik)** ausgeführt ist. Letztere weist einenends eine im Wesentlichen hakenförmige Befestigungsvorrichtung für ein Gehörknöchelchen auf und anderenends ein Piston als direkte akustische als Verbindung zum Innenohr des Patienten nach der Implantation.

Auch in **Fig. 2c** ist ein in den ersten Funktionsabschnitt 12' des physikalischen Ohr-Modells 11 für einen Testvorgang im erfindungsgemäßen Simulator-System 10 eingebrachtes **passives Mittelohr-Implantat 14**‴ angedeutet. Dieses Implantat ist ebenfalls als Teil-Prothese zur späteren Überbrückung nur eines Teils der menschlichen Gehörknöchelchen-Kette ausgestaltet. Allerdings enthält es einenends anstelle eines Hakens eine Clip-förmige Befestigungsvorrichtung zur Halterung an einem Gehörknöchelchen und an seinem anderen Ende einen weiteren Clip als Verbindung zum Steigbügel-Fußknochen des Patienten nach der Implantation der Mittelohrprothese.

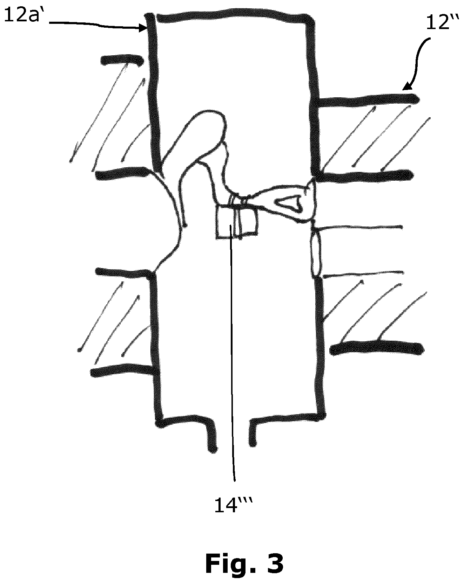

Im Gegensatz zu den Ausführungsformen der Figuren 2a bis 2c ist in **Fig. 3** andeutungsweise ein für einen Testvorgang im erfindungsgemäßen Simulator-System 10 in den ersten Funktionsabschnitt 12a' des Mittelohr-Modells 11 eingebrachtes **aktives Mittelohr-Implantat 14‴** dargestellt. Der Hohlraum des ersten Funktionsabschnitts 12a' ist bei dieser Ausführungsform -wie übrigens auch in Fig. 1- auspumpbar gestaltet.

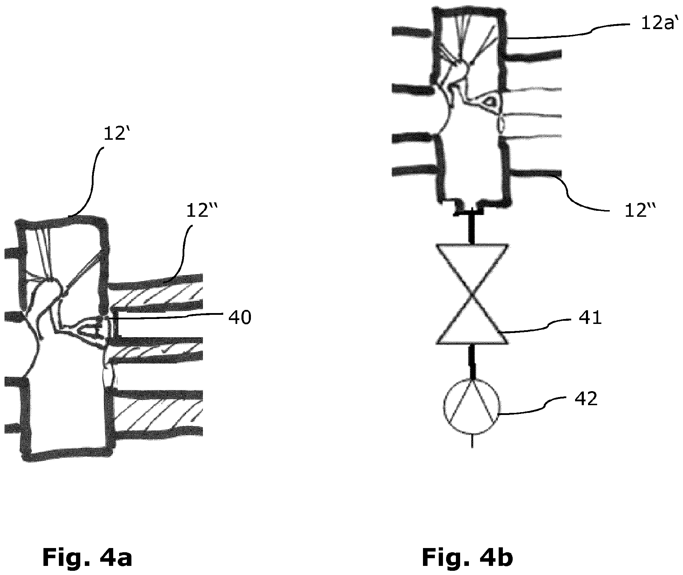

**Fig. 4a** zeigt in einer schematischen Teilabbildung eine Ausführungsform des Mittelohr-Modells 11, in welcher ein **Druckausgleichsfenster 40** zwischen dem (hier nicht-auspumpbar gestalteten) ersten Funktionsabschnitt 12' und dem zweiten Funktionsabschnitt 12" vorgesehen ist. Das Druckausgleichsfenster 40 ist der menschlichen Hörschnecke (insbesondere dem runden Fenster) nachempfunden.

In **Fig. 4b** hingegen ist eine Ausführungsform der Erfindung mit einem auspumpbaren ersten Funktionsabschnitt 12a' gezeigt. An diesen angeschlossen ist ein **Ventil 41** sowie im Anschluss daran eine **Pumpe 42,** jeweils in symbolischer Darstellung, abgebildet.

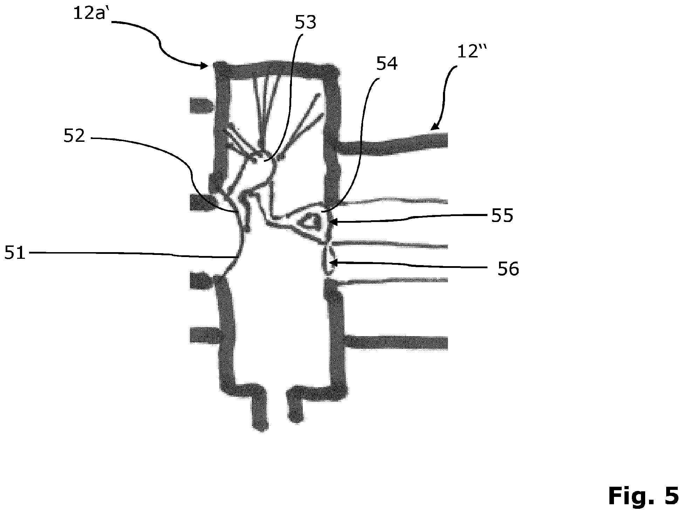

Die schematische Detailabbildung von **Fig. 5** zeigt einen (hier wiederum auspumpbaren) ersten Funktionsabschnitt 12a' des erfindungsgemäßen Mittelohr-Modells 11, der das humane Mittelohr nachstellt. Darin eingebaut sind anatomische Funktions-Komponenten, welche die mechanischen Eigenschaften von funktionellen Strukturen des humanen Mittelohrs nachbilden sollen, insbesondere des Trommelfells, der Bänder und Sehnen des Mittelohrs, der Mittelohrknöchelchen sowie der Mittelohrgelenke, wie des Incudo-Malleal- und des Incudo-Steigbügel-Gelenks.

Die anatomischen Funktions-Komponenten sind in ihrer Geometrie, ihrer relativen Position und Winkelausrichtung zueinander innerhalb des das menschliche Mittelohr abbildenden ersten Funktionsabschnitts 12a', sowie in ihren Weichteileigenschaften den entsprechenden natürlichen anatomischen Komponenten des humanen Mittelohrs nachempfunden beziehungsweise nachgebildet.

Im Einzelnen sind in der Ausführungsform von Fig. 5 folgende anatomischen Funktions-Komponenten vorgesehen:
Ein Modell für das **Trommelfell 51,** ein Modell für den **Hammer-Knochen 52,** ein Modell für den **Ambos-Knochen 53,** ein Modell für den **Steigbügel-Knochen 54,** ein Modell des **ovalen Fensters 55** und ein Modell für das **runde Fenster 56.**

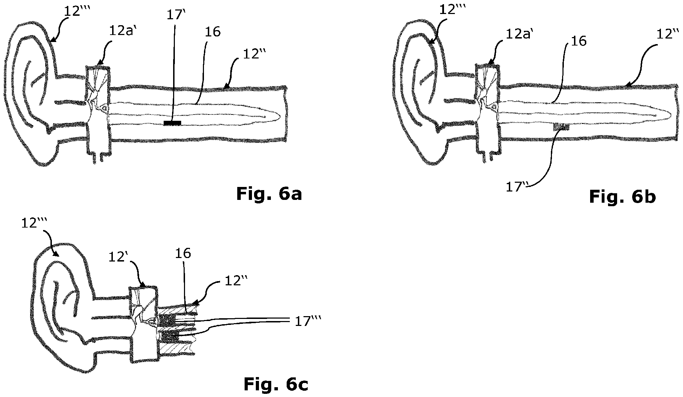

**Fig.** 6a zeigt in einer schematischen Abbildung eine Ausführungsform des physikalischen Ohr-Modells 11 eines erfindungsgemäßen Simulator-Systems 10 ähnlich dem in Fig. 1. Im zweiten Funktionsabschnitts 12" ist eine auf einer Innenfläche der geschlossenen Kavität 16 eine als **Hydrophon 17'** ausgebildete und zumindest teilweise von (hier nicht eigens dargestellter) Flüssigkeit 16a umgebene Drucksonde angeordnet. Ein Teil der (hier ebenfalls nicht eigens dargestellten) elektrischen Signalleitung 18 vom Hydrophon 17' tritt abgedichtet durch eine Wand der geschlossenen Kavität 16 sowie durch die Wandung des zweiten Funktionsabschnitts 12" hindurch und mündet dann in das Auswertemodul 15.

Eine Alternative zur Ausführungsform von Fig. 6a ist in **Fig. 6b** dargestellt: Hier umfasst die Drucksonde 17 einen **Druck-Sensor 17",** welcher an einer Außenwand der geschlossenen Kavität 16 angeordnet ist und daher keine Abdichtung erfordert. Außerdem ist ein solcher Druck-Sensor 17" deutlich preisgünstiger als ein Hydrophon 17'. Letzteres bildet allerdings die Schallleitung zum menschlichen Innenohr vermutlich etwas exakter ab.

Die schematische Teil-Abbildung von **Fig.** 6c stellt eine Ausführungsform des physikalischen Ohr-Modells 11 eines erfindungsgemäßen Simulator-Systems 10 dar, bei welcher im zweiten Funktionsabschnitt 12" am Übergang zum ersten Funktionsabschnitt 12' eine Drucksonde 17 angeordnet ist, die hier zwei **Luft-Mikrophone 17‴** umfasst.

Das Hydrophon 17' und/oder der Druck-Sensor 17" und/oder die Luft-Mikrophone 17‴ der Drucksonde 17 weisen jeweils in der Regel einen Durchmesser zwischen 0,5mm und 5mm, insbesondere zwischen 1mm und 2mm, auf.

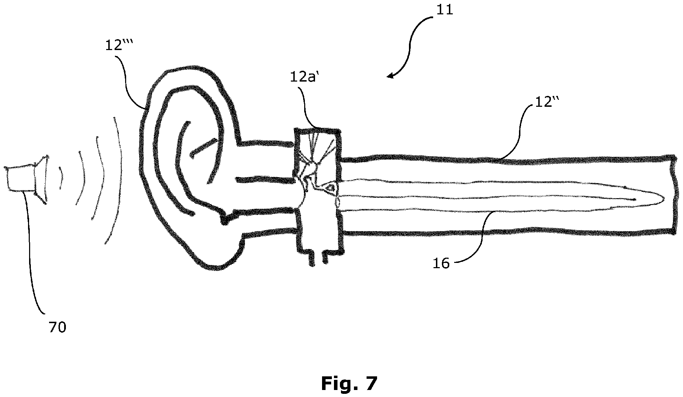

**Fig. 7** schließlich zeigt in einer schematischen Abbildung ähnlich Fig. 1 eine Ausführungsform des physikalischen Ohr-Modells 11 eines erfindungsgemäßen Simulator-Systems 10 mit einem das Ohr-Modell 11 von dessen (das menschliche Außen-Ohr nachbildenden) drittem Funktionsabschnitt 12‴ her beschallenden **Lautsprecher 70** in einer symbolischen Darstellung mit emittierten Schallwellen.

### Bezugszeichenliste:

- 10: Simulator-System
- 11: physikalisches Ohr-Modell
- 12': erster Funktionsabschnitt (Mittelohrmodell)
- 12a': abpumpbarer erster Funktionsabschnitt
- 12": zweiter Funktionsabschnitt (Innenohrmodell)
- 12‴: dritter Funktionsabschnitt (Außenohrmodell)
- 13: Detektionsvorrichtung
- 14'; 14"; 14‴: passive Mittelohrimplantate
- 14ʺʺ: aktives Mittelohrimplantat
- 15: Auswertemodul
- 16: geschlossene Kavität
- 16a: Flüssigkeit in Kavität
- 17: Drucksonde
- 17': Hydrophon
- 17": Druck-Sensor
- 17‴: Luft-Mikrophon
- 18: elektrische Signalleitung
- 40: Druckausgleichsfenster
- 41: Ventil
- 42: Pumpe
- 51: Trommelfell-Modell
- 52: Hammer-Modell
- 53: Ambos-Modell
- 54: Steigbügel-Modell
- 55: Modell ovales Fenster
- 56: Modell rundes Fenster
- 70: Lautsprecher

### Referenzliste

Für die Beurteilung der Patentfähigkeit in Betracht gezogene Publikationen:
[1] Internationale Norm ASTM F2504-05 "Standard Practice for Describing System Output of Implantable Middle Ear Hearing Devices" under the jurisdiction of ASTM Committee F04 on Medical and Surgical Materials and Devices, Subcommittee F04.37 on Implantable Hearing Devices, approved March 1, 2014 and published April 2014, DOI: a0.1520/F2504-05R14, available from http://www.ansi.org
[2] Kuru I, Maier H, Muller M, Lenarz T, Lueth TC. "A 3D-printed functioning anatomical human middle ear model", Hear Res. 2016 Oct; 340:204-213, doi: 10.1016/j.heares.2015.12.025, Epub 2016 Jan 7, PMID: 26772730
[3] DE 10 2018 118 918 B3
[4] DE 10 2005 041 942 A1
[5] G. Strauß et al., "Evaluation of eines Trainingssystems für die Felsenbeinchirurgie mit opto-elektronischer Detektion", HNO 2009 · 57:999-1009, Springer Medizin Verlag, 20. August 2009
[6] Shawn B. Mathews et al., "Incus and Stapes Footplate Simulator", Laryngoscope 107: December 1997, 1614-1616
[7] A. O. Owa et al., "A middle-ear simulator for practicing prostheses placement for otosclerosis surgery using ward-based materials", The Journal of Laryngology & Otology, June 2003, Vol. 117, pp. 490-492
[8] Robert Mills et al., "Surgical skills training in middle-ear surgery", The Journal of Laryngology & Otology, March 2003, Vol. 117, pp. 159-163
[9] Evan A. Longfield et al., "3D Printed Pediatric Temporal Bone: A Novel Training Model", Otology & Neurotology, 2015, 36:793-795
[10] Konrad Entsfellner et al., "A new physical temporal bone and middle ear model with complete ossicular chain for simulating surgical procedures", Proceedings of the 2015 IEEE Conference of Robotics and Biomimetics, Zhuhai, China, pp. 1654-1659
[11] Matthew M. Dedmon et al., "Development and Validaton of a Modular Endoscopic Ear Surgery Skills Trainer", Otology & Neurotology, 2017, 38:1193-1197
[12] Yann Nguyen et al., "Modifications to a 3D-printed temporal bone model for augmented stapes fixation surgery teaching", Eur Arch Otorhinolaryngol, 2017, 274:2733-2739
[13] T. Beleites et al., "Von der Rekonstruktion zur Funktion; Tympanoplastik-Training mit Real-Time Feedback", HNO 7, 2021, 69:556-561
[14] Jan Christoffer Luers et al., "Surgical anatomy and pathology of the middle ear", J. Anat. (2016) 228, pp338-353
[15] Dominik Péus et al., "Sheep as large animal ear model: Middle-ear ossicular velocities and intracochlear sound pressure" in Hearing Research (2017), 351 Jg., pp88-97
[16] Martin Grossöhmichen et al., "Validation of methods for prediction of clinical output levels from measurements in human cadaveric ears" in Scientific Reports (2017), 7. Jg., Nr. 1, pp1-10
[17] CN 110246404 B

## Patentansprüche

1. Simulator-System (10) zur Durchführung von Messungen akustischer Eigenschaften von passiven Mittelohr-Implantaten (14'; 14"; 14‴), mit einem physikalischen Ohr-Modell (11) zur Simulation von Teilen des menschlichen Ohrs umfassend einen ersten Funktionsabschnitt (12'; 12a'), der das humane Mittelohr nachstellt, mit einer Detektionsvorrichtung (13) zur Messung von ausgewählten, zeitlich veränderlichen akustischen Parametern eines in den ersten Funktionsabschnitt (12'; 12a') eingesetzten Mittelohr-Implantats (14'; 14"; 14‴), und mit einem Auswertemodul (15), welches mit der Detektionsvorrichtung (13) gemessene Parameter-Daten speichert und bewertet,
**dadurch gekennzeichnet,**
**dass** das physikalische Ohr-Modell (11) ausschließlich artifizielle Materialien einschließlich Kunststoffe und/oder Metallteile enthält; dass das physikalische Ohr-Modell (11) einen zweiten Funktionsabschnitt (12") umfasst, der das humane Innenohr nachstellt und eine mit Flüssigkeit (16a) gefüllte, geschlossene Kavität (16) aufweist;
**dass** die Detektionsvorrichtung (13) mindestens eine Drucksonde (17) umfasst, die an einer Außenwand oder innerhalb der geschlossenen Kavität (16) des zweiten Funktionsabschnitts (12") angeordnet ist;
**dass** die Drucksonde (17) ein Hydrophon (17') umfasst, welches innerhalb der geschlossenen Kavität (16) zumindest teilweise von der Flüssigkeit (16a) umgeben angeordnet ist;
**dass** das Hydrophon (17') auf einer Innenfläche der geschlossenen Kavität (16) des zweiten Funktionsabschnitts (12") angeordnet ist;
**dass** mindestens eine elektrische Signalleitung (18) von der Detektionsvorrichtung (13) zum Auswertemodul (15) führt, über welche mit der Detektionsvorrichtung (13) gemessene Parameter-Daten direkt an das Auswertemodul (15) geleitet werden können; und dass ein Teil der elektrischen Signalleitung (18) abgedichtet durch eine Wand der geschlossenen Kavität (16) hindurchtritt und in das Hydrophon (17') mündet.

2. Simulator-System nach Anspruch 1, **dadurch gekennzeichnet, dass** die Drucksonde (17) einen Druck-Sensor (17") umfasst, welches an einer Außenwand der geschlossenen Kavität (16) angeordnet ist, und in welches ein Teil der elektrischen Signalleitung (18) mündet.

3. Simulator-System nach einem der vorhergehenden Ansprüche, **dadurch gekennzeichnet, dass** das Hydrophon (17') und/oder der Druck-Sensor (17") der Drucksonde (17) jeweils einen Durchmesser zwischen 0,5mm und 5mm, vorzugsweise zwischen 1mm und 2mm, aufweisen.

4. Simulator-System nach einem der vorhergehenden Ansprüche, **dadurch gekennzeichnet, dass** das physikalische Ohr-Modell (11) zur Simulation von Teilen des menschlichen Ohrs einen dritten Funktionsabschnitt (12‴) umfasst, der das humane äußere Ohr nachstellt und insbesondere dessen Schallleitungseigenschaften nachbildet.

5. Simulator-System nach einem der vorhergehenden Ansprüche, **dadurch gekennzeichnet, dass** die Funktionsabschnitte (12'; 12a'; 12"; 12‴) über ein Flanschsystem miteinander verbunden sind.

6. Simulator-System nach einem der vorhergehenden Ansprüche, **dadurch gekennzeichnet, dass** der erste Funktionsabschnitt (12'; 12a'), der das humane Mittelohr nachstellt, Komponenten aufweist, welche die mechanischen Eigenschaften des Trommelfells, der Bänder und Sehnen des Mittelohrs, der Mittelohrknöchelchen sowie der Mittelohrgelenke, insbesondere des Incudo-Malleal- und des Incudo-Steigbügel-Gelenks, nachbilden.

7. Simulator-System nach Anspruch 6, **dadurch gekennzeichnet, dass** die Komponenten des ersten Funktionsabschnitts (12'; 12a'), welche die mechanischen Eigenschaften von funktionellen Strukturen des humanen Mittelohrs nachbilden, in ihrer Geometrie, relativen Position und Winkelausrichtung zueinander, sowie in ihren Weichteileigenschaften den entsprechenden anatomischen Komponenten des humanen Mittelohrs nachempfunden beziehungsweise nachgebildet sind.

8. Simulator-System nach einem der vorhergehenden Ansprüche, **dadurch gekennzeichnet, dass** die geschlossene Kavität (16) des zweiten Funktionsabschnitts (12") ein Druckausgleichsfenster (40) aufweist, welches der menschlichen Hörschnecke (rundes Fenster) nachempfunden ist.

9. Simulator-System nach einem der vorhergehenden Ansprüche, **dadurch gekennzeichnet, dass** die Funktionsabschnitte (12'; 12a'; 12"; 12‴) des physikalischen Ohr-Modells (11) auf der Grundlage der anatomischen Struktur sowie der statischen und dynamischen Eigenschaften von Teilen des menschlichen Ohrs, insbesondere aufgrund von Laborversuchen sowie mittels CT-Bildern erzeugt sind.

10. Simulator-System nach einem der vorhergehenden Ansprüche, **dadurch gekennzeichnet, dass** in das Auswertemodul (15) ein Expertensystem und/oder künstliche Intelligenz implementiert ist, womit auf den gemessenen und/oder simulierten Parameter-Daten basierende Informationen mit vorgegebenen Norm-Werten verglichen werden können.

11. Simulator-System nach Anspruch 10, **dadurch gekennzeichnet, dass** das Auswertemodul (15) so ausgelegt ist, dass es das normale Übertragungsverhalten eines eingesetzten Implantats optisch im Frequenzbereich der menschlichen Sprache, insbesondere zwischen 125Hz und 16kHz, nachbildet und in Echtzeit während der Validierung mit einer akustischen Signalübertragung des gesunden menschlichen Gehörs vergleicht.

12. Verfahren zur Herstellung eines Simulator-Systems (10) nach einem der vorhergehenden Ansprüche, **dadurch gekennzeichnet, dass** die Kavität (16) zunächst mit jeweils mindestens zwei Öffnungen zum späteren Einfüllen der Flüssigkeit (16a) erzeugt wird, und dass nach dem Befüllen der Kavität (16) mit der Flüssigkeit (16a) sämtliche Öffnungen anschließend flüssigkeitsdicht versiegelt werden, vorzugsweise mittels Einwirkung von UV-Strahlung.

13. Verfahren nach Anspruch 12, **dadurch gekennzeichnet, dass** die Kavität (16) mittels eines 3D-Druckverfahrens hohl und röhrenförmig, vorzugsweise auf der Grundlage von hochauflösenden CT-Datensätzen von Originalen der nachzubildenden Bereiche des menschlichen Körpers, hergestellt wird.

## Geänderte Patentansprüche

### Geänderte Patentansprüche gemäss Regel 137(2) EPÜ.

1. Simulator-System (10) zur Durchführung von Messungen akustischer Eigenschaften von passiven Mittelohr-Implantaten (14'; 14"; 14‴), mit einem physikalischen Ohr-Modell (11) zur Simulation von Teilen des menschlichen Ohrs umfassend einen ersten Funktionsabschnitt (12'; 12a'), der das humane Mittelohr nachstellt, mit einer Detektionsvorrichtung (13) zur Messung von ausgewählten, zeitlich veränderlichen akustischen Parametern eines in den ersten Funktionsabschnitt (12'; 12a') eingesetzten Mittelohr-Implantats (14'; 14"; 14‴), und mit einem Auswertemodul (15), welches mit der Detektionsvorrichtung (13) gemessene Parameter-Daten speichert und bewertet,
wobei das physikalische Ohr-Modell (11) ausschließlich artifizielle Materialien einschließlich Kunststoffe und/oder Metallteile enthält und einen zweiten Funktionsabschnitt (12") umfasst, der das humane Innenohr nachstellt und eine mit Flüssigkeit (16a) gefüllte, geschlossene Kavität (16) aufweist,
und wobei mindestens eine elektrische Signalleitung (18) von der Detektionsvorrichtung (13) zum Auswertemodul (15) führt, über welche mit der Detektionsvorrichtung (13) gemessene Parameter-Daten direkt an das Auswertemodul (15) geleitet werden können, **dadurch gekennzeichnet,**
**dass** die Detektionsvorrichtung (13) mindestens eine Drucksonde (17) umfasst, die an einer Außenwand oder innerhalb der geschlossenen Kavität (16) des zweiten Funktionsabschnitts (12") angeordnet ist;
**dass** die Drucksonde (17) ein Hydrophon (17') umfasst, welches innerhalb der geschlossenen Kavität (16) zumindest teilweise von der Flüssigkeit (16a) umgeben angeordnet ist;
**dass** das Hydrophon (17') auf einer Innenfläche der geschlossenen Kavität (16) des zweiten Funktionsabschnitts (12") angeordnet ist;
und **dass** ein Teil der elektrischen Signalleitung (18) abgedichtet durch eine Wand der geschlossenen Kavität (16) hindurchtritt und in das Hydrophon (17') mündet.

2. Simulator-System nach Anspruch 1, **dadurch gekennzeichnet, dass** die Drucksonde (17) einen Druck-Sensor (17") umfasst, welches an einer Außenwand der geschlossenen Kavität (16) angeordnet ist, und in welches ein Teil der elektrischen Signalleitung (18) mündet.

3. Simulator-System nach einem der vorhergehenden Ansprüche, **dadurch gekennzeichnet, dass** das Hydrophon (17') und/oder der Druck-Sensor (17") der Drucksonde (17) jeweils einen Durchmesser zwischen 0,5mm und 5mm, vorzugsweise zwischen 1mm und 2mm, aufweisen.

4. Simulator-System nach einem der vorhergehenden Ansprüche, **dadurch gekennzeichnet, dass** das physikalische Ohr-Modell (11) zur Simulation von Teilen des menschlichen Ohrs einen dritten Funktionsabschnitt (12‴) umfasst, der das humane äußere Ohr nachstellt und insbesondere dessen Schallleitungseigenschaften nachbildet.

5. Simulator-System nach einem der vorhergehenden Ansprüche, **dadurch gekennzeichnet, dass** die Funktionsabschnitte (12'; 12a'; 12"; 12‴) über ein Flanschsystem miteinander verbunden sind.

6. Simulator-System nach einem der vorhergehenden Ansprüche, **dadurch gekennzeichnet, dass** der erste Funktionsabschnitt (12'; 12a'), der das humane Mittelohr nachstellt, Komponenten aufweist, welche die mechanischen Eigenschaften des Trommelfells, der Bänder und Sehnen des Mittelohrs, der Mittelohrknöchelchen sowie der Mittelohrgelenke, insbesondere des Incudo-Malleal- und des Incudo-Steigbügel-Gelenks, nachbilden.

7. Simulator-System nach Anspruch 6, **dadurch gekennzeichnet, dass** die Komponenten des ersten Funktionsabschnitts (12'; 12a'), welche die mechanischen Eigenschaften von funktionellen Strukturen des humanen Mittelohrs nachbilden, in ihrer Geometrie, relativen Position und Winkelausrichtung zueinander, sowie in ihren Weichteileigenschaften den entsprechenden anatomischen Komponenten des humanen Mittelohrs nachempfunden beziehungsweise nachgebildet sind.

8. Simulator-System nach einem der vorhergehenden Ansprüche, **dadurch gekennzeichnet, dass** die geschlossene Kavität (16) des zweiten Funktionsabschnitts (12") ein Druckausgleichsfenster (40) aufweist, welches der menschlichen Hörschnecke (rundes Fenster) nachempfunden ist.

9. Simulator-System nach einem der vorhergehenden Ansprüche, **dadurch gekennzeichnet, dass** die Funktionsabschnitte (12'; 12a'; 12"; 12‴) des physikalischen Ohr-Modells (11) auf der Grundlage der anatomischen Struktur sowie der statischen und dynamischen Eigenschaften von Teilen des menschlichen Ohrs, insbesondere aufgrund von Laborversuchen sowie mittels CT-Bildern erzeugt sind.

10. Simulator-System nach einem der vorhergehenden Ansprüche, **dadurch gekennzeichnet, dass** in das Auswertemodul (15) ein Expertensystem und/oder künstliche Intelligenz implementiert ist, womit auf den gemessenen und/oder simulierten Parameter-Daten basierende Informationen mit vorgegebenen Norm-Werten verglichen werden können.

11. Simulator-System nach Anspruch 10, **dadurch gekennzeichnet, dass** das Auswertemodul (15) so ausgelegt ist, dass es das normale Übertragungsverhalten eines eingesetzten Implantats optisch im Frequenzbereich der menschlichen Sprache, insbesondere zwischen 125Hz und 16kHz, nachbildet und in Echtzeit während der Validierung mit einer akustischen Signalübertragung des gesunden menschlichen Gehörs vergleicht.

12. Verfahren zur Herstellung eines Simulator-Systems (10) nach einem der vorhergehenden Ansprüche, **dadurch gekennzeichnet, dass** die Kavität (16) zunächst mit jeweils mindestens zwei Öffnungen zum späteren Einfüllen der Flüssigkeit (16a) erzeugt wird, und dass nach dem Befüllen der Kavität (16) mit der Flüssigkeit (16a) sämtliche Öffnungen anschließend flüssigkeitsdicht versiegelt werden, vorzugsweise mittels Einwirkung von UV-Strahlung;
dass mindestens eine Drucksonde (17) an einer Außenwand oder innerhalb der geschlossenen Kavität (16) des zweiten Funktionsabschnitts (12") angeordnet wird;
dass die Drucksonde (17) ein Hydrophon (17') umfasst, welches innerhalb der geschlossenen Kavität (16) zumindest teilweise von der Flüssigkeit (16a) umgeben angeordnet wird;
dass das Hydrophon (17') auf einer Innenfläche der geschlossenen Kavität (16) des zweiten Funktionsabschnitts (12") angeordnet wird;
und dass ein Teil der elektrischen Signalleitung (18) derart angeordnet wird, dass er abgedichtet durch eine Wand der geschlossenen Kavität (16) hindurchtritt und in das Hydrophon (17') mündet.

13. Verfahren nach Anspruch 12, **dadurch gekennzeichnet, dass** die Kavität (16) mittels eines 3D-Druckverfahrens hohl und röhrenförmig, vorzugsweise auf der Grundlage von hochauflösenden CT-Datensätzen von Originalen der nachzubildenden Bereiche des menschlichen Körpers, hergestellt wird.
